# EUROPEAN PATENT SPECIFICATION

(11) **EP 2 468 475 B1**
(45) Date of publication and mention of the grant of the patent: **22.01.2020**
(21) Application number: 11010081.5
(22) Date of filing: 22.12.2011
(51) Int. Cl.: B29C 45/77

(54) **Plasticizing device**
Plastifiziervorrichtung
Dispositif de pastification

(30) Priority: 22.12.2010 JP 2010286672
(43) Date of publication of application: 27.06.2012
(73) Proprietor: Sumitomo Heavy Industries, Ltd., Tokyo 141-6025 (JP)
(72) Inventor: Ishida, Hironobu, Yokosuka-shi Kanagawa 237-8555 (JP); Satoh, Yuhji, Yokosuka-shi Kanagawa 237-8555 (JP); Ookubo, Youji, Yokosuka-shi Kanagawa 237-8555 (JP); Washida, Kouhei, Chiba-shi Chiba 263-0001 (JP)
(74) Representative: Carstens, Dirk Wilhelm

(56) References cited:
- JP-A- 7 214 615
- JP-A- 61 037 409
- JP-A- 61 089 820
- JP-A- 2004 351 661

## Description

### BACKGROUND OF THE INVENTION

### 1. Field of the Invention

The present invention relates to a plasticizing device provided with a feeder which supplies resin into a cylinder, and a screw which moves axially in the cylinder. In particular, the present invention relates to a plasticizing device which is able to control a state of resin in the cylinder.

### 2. Description of the Related Art

Conventionally, a resin processing device provided with a screw which moves axially in a cylinder is known (see JP 61-089820 A, for example).

The resin processing device includes plural temperature sensing devices which sense temperature of molding material supplied from a supply device (a hopper) into the cylinder, plural pressure sensing devices which sense pressure of the molding material, and plural inductors which heat the cylinder by induction heating. The resin processing device controls a degree of the induction heating by the inductors so that an amount of heat which is held by the resin in the cylinder and calculated on values detected by the temperature sensing devices reaches a predetermined ideal amount of heat, and so that fusibility or viscosity of the resin in the cylinder which is calculated on values detected by the pressure sensing devices reaches a predetermined ideal fusibility or viscosity.

In this way, the resin processing device reduces pores, cracks, distortions, or the like, of a product, by maintaining a state of resin extruded from the cylinder suitable for processing at all times.

Also, conventionally, an injection molding machine provided with a feeder which supplies resin into a cylinder and a screw which moves axially in the cylinder is known (see JP 2004-351661 A, for example).

The injection molding machine includes a torque detector which detects torque of a metering servo motor and a controlling part which controls rotating speed of the feeder. The injection molding machine controls the rotating speed of the feeder (i.e., a state of resin in the cylinder) so that torque of the metering servo motor detected by the torque detector matches a predetermined reference value.

In this way, the injection molding machine makes available a metering servo motor whose rated torque is less than that of a conventional metering servo motor, by keeping a torque value of the metering servo motor low.

However, the resin processing device in JP 61-089820 A may not be able to obtain sufficient control responsiveness, not only because device configuration becomes complex since the resin processing device requires installations of multiple temperature sensing devices, multiple pressure sensing devices, and multiple inductors over a wide range in an axial direction of the cylinder, but also because the resin processing device controls a state of resin in the cylinder by controlling a degree of induction heating by the inductors.

Also, the injection molding machine in JP 2004-351661 A is only able to reduce a maximum torque while rotating the screw at a predetermined speed to less than a predetermined value, by decreasing a rotating speed of the feeder. The injection molding machine in JP 2004-351661 A does not adjust a state of resin in the cylinder to a state suitable for processing.

### SUMMARY OF THE INVENTION

In consideration of the above, the present invention is intended to provide a plasticizing device which is able to monitor a state of resin more easily and more rapidly.

To meet the above objective, a plasticizing device according to an embodiment of the present invention is provided as set forth in claim 1. Preferred embodiments of the present invention may be gathered from the dependent claims.

According to the above, an embodiment of the present invention can provide a plasticizing device which is able to monitor a state of resin more easily and more rapidly.

### BRIEF DESCRIPTION OF THE DRAWINGS

FIG. 1 is a diagram illustrating a configuration example of a plasticizing device according to an embodiment of the present invention.
FIG. 2 is a diagram illustrating relationships between a pressure in a cylinder and a distance between each of points in the cylinder and a reference point on a screw.
FIG. 3 is a diagram illustrating a process for moving a pressure-rise point deviating from an ideal range into the ideal range.
FIG. 4 is a flowchart illustrating a flow of a process for estimating and adjusting a pressure-rise point.
FIG. 5 is a diagram illustrating a method for estimating a pressure-rise point.

### DETAILED DESCRIPTION OF THE PREFERRED EMBODIMENT

With reference to the figures, embodiments of the present invention are described in the following.

### [First Embodiment]

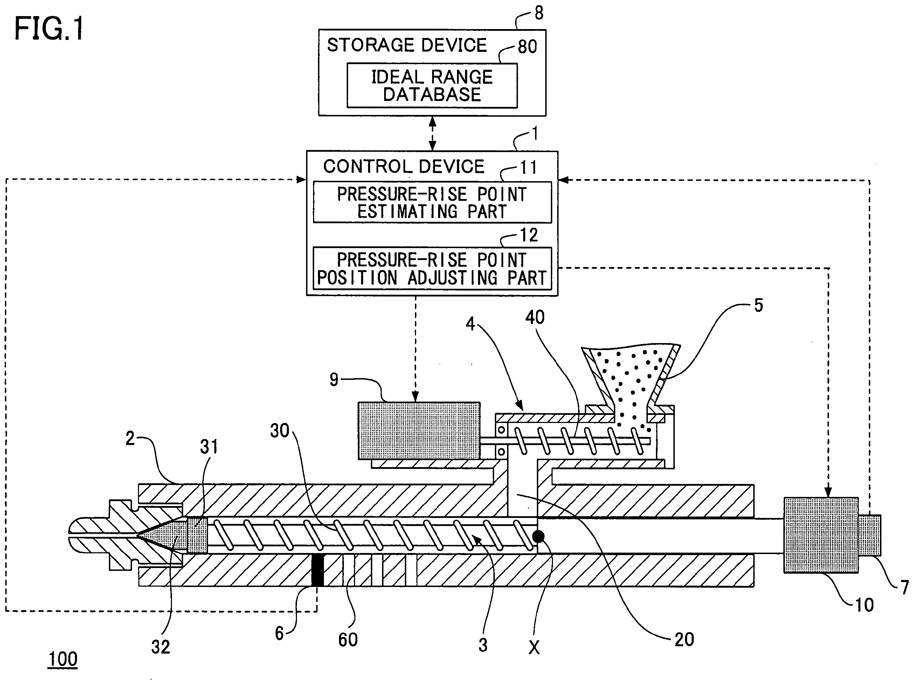

FIG. 1 illustrates a configuration example of a plasticizing device according to an embodiment of the present invention.

A plasticizing device 100 is mounted on a resin processing device such as an extruder, an injection molding machine, or the like. The plasticizing device 100 includes a control device 1, a cylinder 2, a screw 3, a feeder 4, a hopper 5, a cylinder pressure sensor 6, a screw position detection device 7, a storage device 8, a feeder motor 9, and a metering motor 10.

The control device 1 is a computer having a CPU (Central Processing Unit), a RAM (Random Access Memory), a ROM (Read Only Memory), etc. For example, the control device 1 reads out programs corresponding to functional elements such as a pressure-rise point estimating part 11 and a pressure-rise point position adjusting part 12 from the ROM, loads the programs into the RAM, and then causes the CPU to execute processes corresponding to the functional elements.

The cylinder 2 is provided with an internal space which receives the screw 3 movably in an axial direction and rotatably. The internal space is connected to the feeder 4 via a resin supply opening 20.

The screw 3 is rotationally driven by the metering motor 10 in order to feed resin supplied from the feeder 4 toward a tip (left side of FIG. 1) of the cylinder 2 while melting the resin.

In the embodiment, an injection motor (not shown) and a ball screw mechanism reciprocate the screw 3 linearly in an axial direction. Other known mechanisms may reciprocate the screw 3 linearly in an axial direction.

In the embodiment, the screw 3 mainly includes a flighting (a helical blade) 30 disposed with a predefined pitch, a pressure ring part 31, and a screw head 32. A compression ratio (i.e., an outer diameter of a screw groove part) is constant along the screw groove part where the flighting 30 is formed.

The feeder 4 supplies resin pellets into the cylinder 2 at a desired supply speed, by rotating a feeder screw 40 at a desired rotating speed. The feeder screw 40 is rotationally driven by the feeder motor 9. The resin pellets are replenished from the hopper 5.

The hopper 5 replenishes the feeder 4 with the resin pellets. For example, the hopper 5 is attached to an upper part of the feeder 4.

The cylinder pressure sensor 6 detects pressure in the cylinder 2. For example, a diaphragm gauge, a capacitance type pressure sensor, or the like is used as the cylinder pressure sensor 6.

Also, the cylinder pressure sensor 6 is fitted into one or more sensor installation holes 60 formed on a side wall part of the cylinder 2.

For example, the sensor installation hole 60 is formed at a predefined position between a first position and a second position. The first position corresponds to a back end of the screw groove part where the flighting 30 is formed when the screw 3 is most advanced in the cylinder 2 (i.e., when the screw 3 is moved to the leftmost side as shown in FIG. 1). The second position corresponds to a boundary between the pressure ring part 31 and the screw groove part where the flighting 30 is formed.

In the embodiment, the cylinder pressure sensor 6 is fitted into a leftmost hole of four sensor installation holes 60, two of which are located at one side of a position on the cylinder 2 and the other two of which are located at the other side of the position on the cylinder 2. The position on the cylinder 2 corresponds to a screw center position (i.e., an intermediate position between the first position and the second position). However, the cylinder pressure sensor 6 may be fitted into a sensor installation hole 60 formed singularly near a position on the cylinder 2 which corresponds to the screw center position. Alternatively, plural of the cylinder pressure sensors 6 may be fitted into plural of the sensor installation holes 60 (e.g., more than three sensor installation holes 60). Also, a dummy plug is fitted into the sensor installation holes 60 where the cylinder pressure sensors 6 are not fitted.

The screw position detection device 7 detects a position of the screw 3 in the cylinder 2. For example, the screw position detection device 7 detects a position of the screw 3 based on an output of an encoder attached to an injection motor (not shown) in a case where the injection motor reciprocates the screw 3 linearly in an axial direction.

The storage device 8 stores a variety of information. For example, the storage device 8 is a nonvolatile storage medium such as an EPROM, a flash memory, or the like. The storage device 8 stores a below described ideal range database 80.

The feeder motor 9 rotates the feeder screw 40. For example, the feeder motor 9 rotates the feeder screw 40 at a rotating speed according to a control signal from the control device 1.

The metering motor 10 rotates the screw 3. For example, the metering motor 10 rotates the screw 3 at a rotating speed according to a control signal from the control device 1.

Next, functional elements in the control device 1 will be described.

The pressure-rise point estimating part 11 is configured to estimate a point (which is a position in the cylinder 2 and hereinafter called a "pressure-rise point") where pressure in the cylinder 2 starts to increase due to resin supplied into the cylinder 2. For example, the pressure-rise point estimating part 11 estimates a pressure-rise point based on detection values of the cylinder pressure sensor 6 and the screw position detection device 7. In the embodiment, a point (position) in the cylinder 2 is represented as a distance from a reference point X. The reference point X corresponds to the above-mentioned first position (a point on the screw 3) which moves with the screw 3 in an axial direction. The pressure-rise point is also represented as a distance from the reference point X.

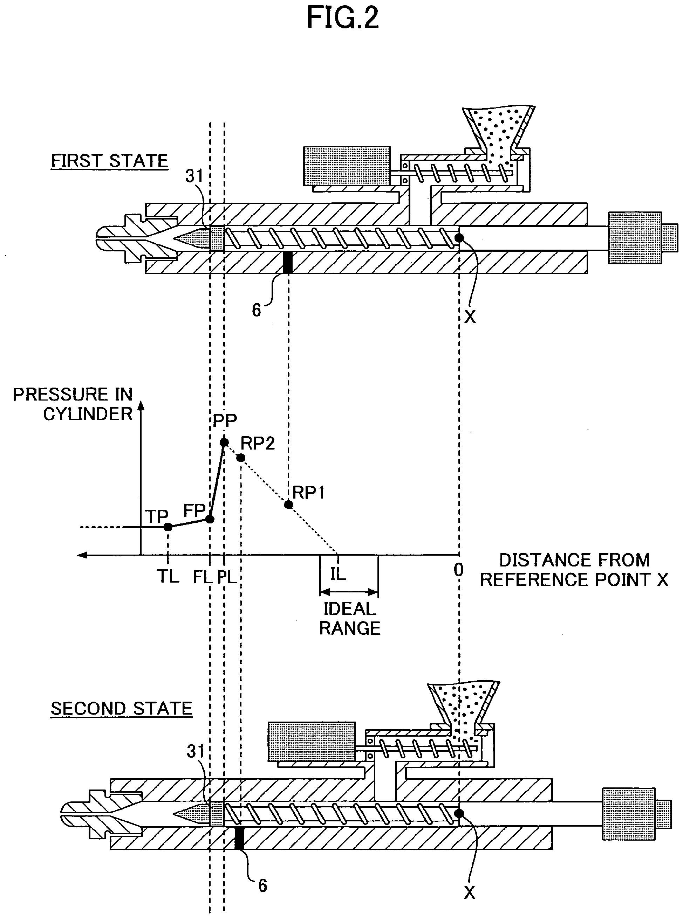

FIG. 2 illustrates a relationship between a pressure in the cylinder 2 and a distance between each of points in the cylinder 2 and the reference point X on the screw 3. A first state of the plasticizing device 100 is shown above a map (hereinafter called an' "in-cylinder pressure map") with a horizontal axis representing a distance from the reference point X and a vertical axis representing a pressure in the cylinder 2. A second state of the plasticizing device 100 is shown below the in-cylinder pressure map.

The first state of the plasticizing device 100 is a state where the screw 3 gets pushed back rightward in FIG. 2 due to melted resin fed into a tip of the cylinder 2. The second state of the plasticizing device 100 is a state where the screw 3 gets pushed back further rightward in FIG. 2 with progression of the feeding. In FIG. 2 showing the first state and the second state, for the sake of clarity, unused sensor installation holes 60 are omitted.

In the embodiment, the in-cylinder pressure map includes a back pressure coordinate TP, a pressure ring part forward end pressure coordinate FP, a peak pressure coordinate PP, and a pressure-rise point IL. The back pressure coordinate TP depends on a back pressure of the screw 3. The pressure ring part forward end pressure coordinate FP, the peak pressure coordinate PP, and the pressure-rise point IL depend on a shape of the screw 3 (e.g., a position of the pressure ring part 31, or the like).

In the embodiment, it was found that the in-cylinder pressure map has a property that pressure in the cylinder 2 increases approximately linearly between the pressure-rise point IL and a back end of the pressure ring part 31 (which corresponds to a position in the cylinder 2 where a peak pressure is generated, hereinafter called a "peak pressure genesis location PL") up to the peak pressure coordinate PP.

In the embodiment, it was also found that the in-cylinder pressure map has a property that pressure in the cylinder 2 decreases approximately linearly between the peak pressure genesis location PL and a forward end of the pressure ring part 31 (hereinafter called a "pressure ring part forward end location FL") down to the pressure ring part forward end pressure coordinate FP.

In addition, in the embodiment, it was also found that the in-cylinder pressure map has a property that pressure in the cylinder 2 decreases approximately linearly between the pressure ring part forward end location FL and a position slightly beyond the screw head 32 (which is a position in the cylinder 2 where pressure in the cylinder 2 equals to the back pressure, and hereinafter called a "back pressure genesis location TL") down to the back pressure coordinate TP.

These properties are maintained over the entire metering process except for moments after a start of the metering process (i.e., except for transient states where sufficient resin has not yet been supplied into the cylinder 2).

Thus, the peak pressure coordinate PP can be calculated from a back pressure setup value through simulations. The pressure-rise point IL can be estimated with a high degree of accuracy due to the property that pressure in the cylinder 2 increases approximately linearly between the pressure-rise point IL and the peak pressure genesis location PL, if pressure in the cylinder 2 at a point between the pressure-rise point IL and the peak pressure genesis location PL is detected. The peak pressure coordinate PP may also be calculated from the back pressure coordinate TP by regarding the back pressure coordinate TP as the pressure ring part forward end pressure coordinate FP.

In FIG. 2, a measured pressure coordinate RP1 is determined by a value detected by the cylinder pressure sensor 6 when the plasticizing device 100 is in the first state and a distance from the reference point X to the cylinder pressure sensor 6. A measured pressure coordinate RP2 is determined by a value detected by the cylinder pressure sensor 6 when the plasticizing device 100 is in the second state and a distance from the reference point X to the cylinder pressure sensor 6.

An installation position of the cylinder pressure sensor 6 is invariant in relation to the cylinder 2. However, since the screw 3 moves back (i.e., moves rightward in FIG. 2) with progression of the metering process, the installation position of the cylinder pressure sensor 6 moves away from the reference point X with progression of the metering process, and seemingly moves from right to left on the in-cylinder pressure map.

The pressure-rise point estimating part 11 determines a position of the screw 3 based on a value detected by the screw position detection device 7 (e.g., the pressure-rise point estimating part 11 determines that the plasticizing device 100 is in the first state in FIG. 2), and determines a position of the cylinder pressure sensor 6 on the in-cylinder pressure map.

Then, the pressure-rise point estimating part 11 determines the measured pressure coordinate RP1 based on a value detected by the cylinder pressure sensor 6 whose position on the in-cylinder pressure map has been determined. Then, the pressure-rise point estimating part 11 can calculate the pressure-rise point IL based on the peak pressure coordinate PP and the measured pressure coordinate RP1.

Specifically, the pressure-rise point estimating part 11 derives as the pressure-rise point IL an abscissa intercept of a straight line passing through the peak pressure coordinate PP and the measured pressure coordinate RP1.

That is, the pressure-rise point IL can be estimated based on the peak pressure coordinate PP and a measured pressure coordinate. Thus, the pressure-rise point estimating part 11 can derive as the pressure-rise point IL an abscissa intercept of a straight line passing through the peak pressure coordinate PP and the measured pressure coordinate RP2.

The pressure-rise point position adjusting part 12 is configured to adjust a position of a pressure-rise point. For example, the pressure-rise point position adjusting part 12 moves the pressure-rise point IL away from or closer to the reference point X by increasing or decreasing synchronization ratio.

The term "synchronization ratio" stands for the ratio of a rotating speed of the feeder screw 40 to a rotating speed of the screw 3.

If a rotating speed of the screw 3 is constant, an increase of a rotating speed of the feeder screw 40 means an increase of the synchronization ratio, while an decrease of a rotating speed of the feeder screw 40 means an decrease of the synchronization ratio.

Similarly, if a rotating speed of the feeder screw 40 is constant, an increase of a rotating speed of the screw 3 means a decrease of the synchronization ratio, while a decrease of a rotating speed of the screw 3 means an increase of the synchronization ratio.

Referring again to FIG. 2, the pressure-rise point IL has an ideal range with a predefined width determined by a metering time, a single shot volume, resin characteristics, a back pressure, a shape of the screw 3, and the like.

The pressure-rise point IL within the ideal range means that quality of resin products manufactured by a resin processing device provided with the plasticizing device 100 is maintained at a certain level. In contrast, the pressure-rise point IL outside the ideal range, if it is close to the reference point X, causes problems such as an excess shear heating, a burn, galling, a pick up, or the like, and, if it is away from the reference point X, causes problems such as an excess shear heating, unmelted resin, a low degree of degassing, a low degree of kneading, or the like.

The ideal range is stored in the ideal range database 80 in the storage device 8. For example, when a resin processing device is powered on, appropriate values according to a setting of the resin processing device are adopted and read out to the RAM in the control device 1.

The ideal range database 80 systematically stores an ideal range readably. The ideal range database 80 stores plural of the ideal ranges while associating them with a metering time, a single shot volume, resin characteristics, a back pressure, a shape of the screw 3, or the like.

The pressure-rise point position adjusting part 12 sends a control signal to at least one of the feeder motor 9 and the metering motor 10 in order to increase or decrease the synchronization ratio so that, if a pressure-rise point estimated by the pressure-rise point estimating part 11 is outside the ideal range, the pressure-rise point falls within the ideal range.

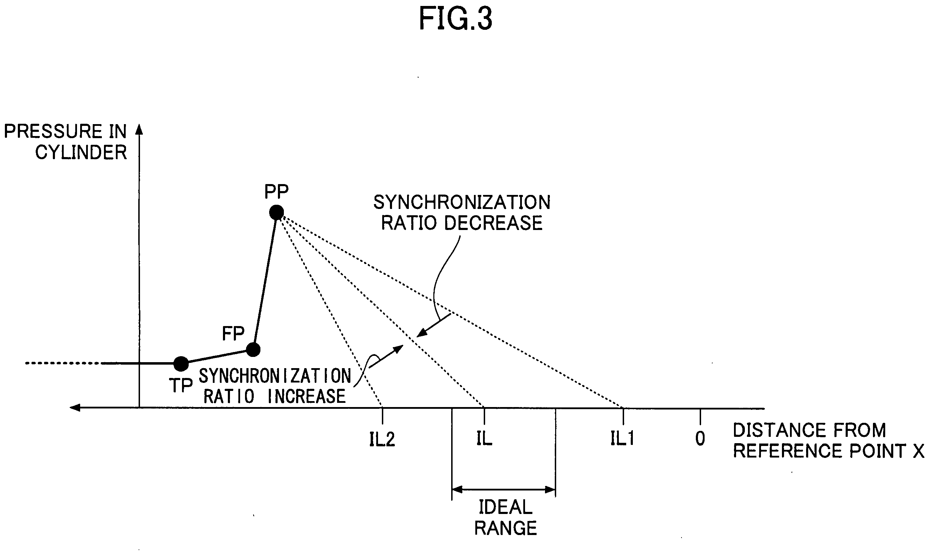

FIG. 3 illustrates a process for moving a pressure-rise point outside the ideal range into the ideal range. FIG. 3 shows that the pressure-rise point position adjusting part 12 decreases the synchronization ratio in order to move a pressure-rise point IL1, which is estimated by the pressure-rise point estimating part 11 and exists outside the ideal range and close to the reference point X, away from the reference point X into the ideal range.

Also, FIG. 3 shows that the pressure-rise point position adjusting part 12 increases the synchronization ratio in order to move a pressure-rise point IL2, which is estimated by the pressure-rise point estimating part 11 and exists outside the ideal range and away from the reference point X, closer to the reference point X into the ideal range.

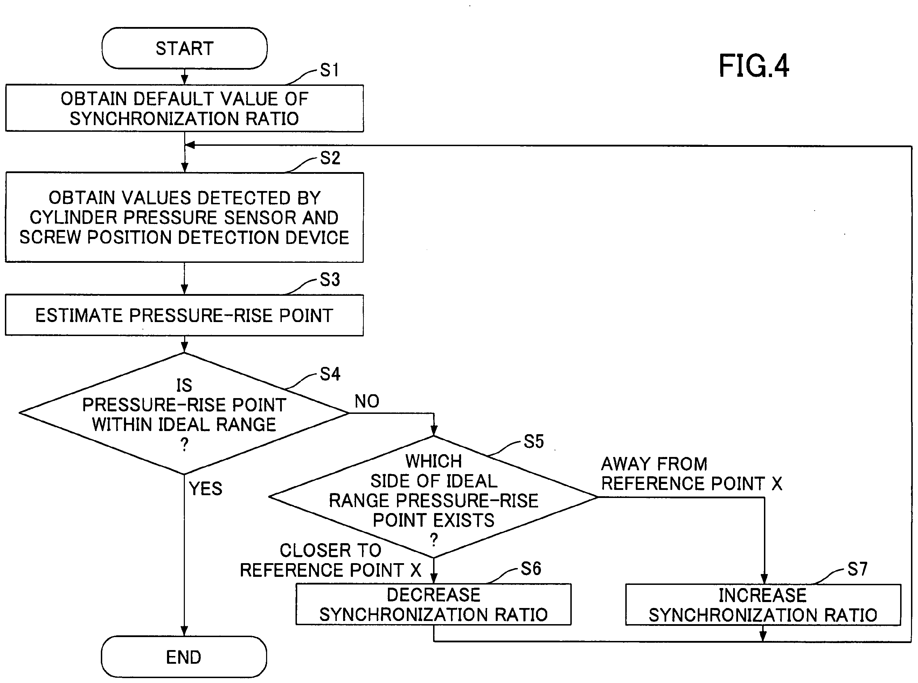

Now, referring to FIG. 4, a process in which the plasticizing device 100 estimates a pressure-rise point and adjusts a position of the estimated pressure-rise point (hereinafter called a "pressure-rise point estimating and adjusting process) will be described. FIG. 4 is a flowchart illustrating a flow of the pressure-rise point estimating and adjusting process. The plasticizing device 100 executes the pressure-rise point estimating and adjusting process repeatedly at a predefined time interval.

Firstly, the control device 1 obtains a default value of a synchronization ratio calculated through a simulation or the like (step S1).

Then, the control device 1 obtains, by using the pressure-rise point estimating part 11, values detected by the cylinder pressure sensor 6 and the screw position detection device 7 (step S2).

The cylinder pressure sensor 6 detects pressure in the cylinder 2 repeatedly at a predefined sampling interval, and records the detected values in a detection value log in the RAM.

Similarly, the screw position detection device 7 detects a position of the screw 3 repeatedly at the same sampling interval as the sampling interval of the cylinder pressure sensor 6, and records the detected values in the detection value log in the RAM while associating them with the pressure in the cylinder 2.

Then, the control device 1 estimates, by using the pressure-rise point estimating part 11, a pressure-rise point based on the obtained detected values (step S3).

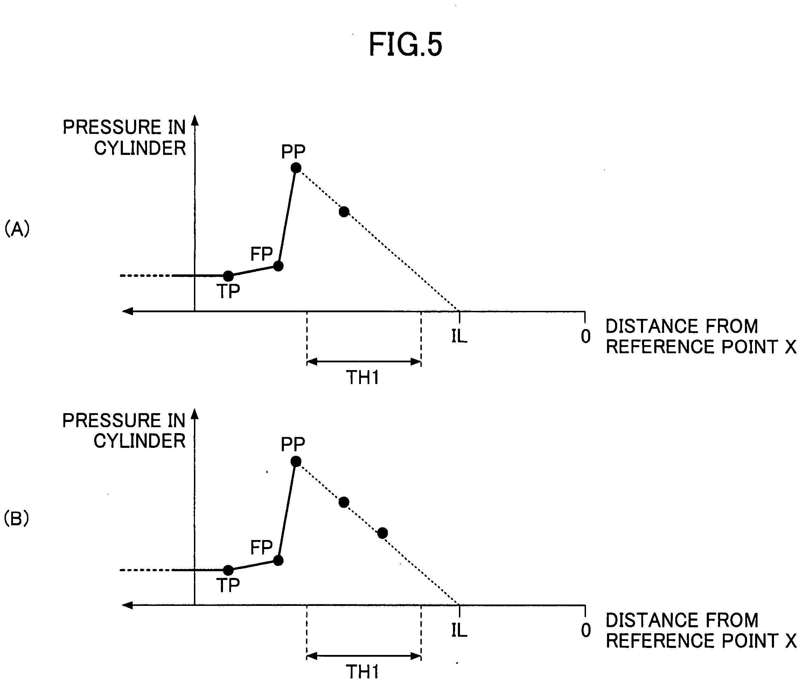

FIG. 5 illustrates a method for estimating a pressure-rise point. FIG. 5 part (A) illustrates a method for estimating a pressure-rise point by using the peak pressure coordinate PP and a detection value pair (a combination of a value detected by the screw position detection device 7 and a value detected by the cylinder pressure sensor 6). FIG. 5 part (B) illustrates a method for estimating a pressure-rise point by using two detection value pairs.

Specifically, the control device 1 obtains a group of detection value pairs recorded in the detection value log. Then, the control device 1 extracts from the group of detection value pairs a detection value pair which meets a condition where a distance between the reference point X and the cylinder pressure sensor 6 falls within a predefined range TH1, and estimates the pressure-rise point IL based on the detection value pair.

In this way, the control device 1 can estimate the pressure-rise point IL from the peak pressure coordinate PP and a single detection value pair based on the property that pressure in the cylinder 2 increases approximately linearly between the pressure-rise point IL and the peak pressure genesis location PL. The control device 1 can also estimate the pressure-rise point IL without using the peak pressure coordinate PP by using two detection value pairs.

That is, the control device 1 can estimate the pressure-rise point IL after extracting two detection value pairs each of which meets a condition where a distance between the reference point X and the cylinder pressure sensor 6 falls within the predefined distance range TH1, and after deriving a straight line passing through the two detection value pairs.

The control device 1 may estimate the pressure-rise point IL after extracting more than two detection value pairs each of which meets a condition where a distance between the reference point X and the cylinder pressure sensor 6 falls within the predefined distance range TH1, and deriving an approximated straight line based on the more than two detection value pairs.

The control device 1 may use the peak pressure coordinate PP in order to estimate the pressure-rise point IL even if the control device 1 extracts two detection value pairs or more.

The detection value pairs may be based on values detected by a single cylinder pressure sensor 6 or values detected by plural of the cylinder pressure sensors 6.

The control device 1 estimates a single pressure-rise point for each metering process. However, the control device 1 may estimate a single pressure-rise point by averaging plural of the pressure-rise points estimated in each metering process.

Then, the control device 1 determines, by using the pressure-rise point estimating part 11, whether the estimated pressure-rise point is in the ideal range (step S4) .

If the control device 1 determines that the estimated pressure-rise point is in the ideal range (YES in step S4), the control device 1 determines to use the synchronization ratio (e.g., a default value) at that time, and terminates this repetition of the pressure-rise point estimating and adjusting process.

In contrast, if the control device 1 determines that the estimated pressure-rise point is not in the ideal range but outside the ideal range (NO in step S4), the control device 1 determines on which side of the ideal range the estimated pressure-rise point exists (step S5).

If the control device 1 determines that the estimated pressure-rise point exists at a side closer to the reference point X (see the pressure-rise point IL1 in FIG. 3) ("CLOSER TO REFERENCE POINT X" in step S5), the control device 1 decreases the synchronization ratio by using the pressure-rise point position adjusting part 12 (step S6).

In contrast, if the control device 1 determines that the estimated pressure-rise point exists at a side away from the reference point X (see the pressure-rise point IL2 in FIG. 3) ("AWAY FROM REFERENCE POINT X" in step S5), the control device 1 increases the synchronization ratio by using the pressure-rise point position adjusting part 12 (step S7).

Specifically, if the control device 1 receives a command for adjusting the synchronization ratio by an operator via an input device (not shown), the control device 1 increases or decreases the synchronization ratio by sending a control signal (a signal for changing a rotating speed) to at least one of the feeder motor 9 and the metering motor 10. The control device 1 repeats steps following step S2, until a pressure-rise point falls within the ideal range.

The control device 1 may increase or decrease the synchronization ratio by automatically sending a control signal (a signal for changing a rotating speed) to at least one of the feeder motor 9 and the metering motor 10 without receiving a command for adjusting the synchronization ratio by an operator via an input device (not shown). Again, the control device 1 may repeat steps following step S2, until a pressure-rise point falls within the ideal range.

The control device 1 may automatically send, by using the pressure-rise point position adjusting part 12, a control signal to at least one of the feeder motor 9 and the metering motor 10 each time a metering process is completed in order to increase or decrease the synchronization ratio.

The control device 1 may not send a control signal each time a metering process is completed but send a control signal each time a predefined number of metering processes are completed. This is, for example, to allow the control device 1 to additionally respond to a case where the control device 1 increases or decreases the synchronization ratio after estimating a single pressure-rise point by averaging plural of the pressure-rise points estimated at each metering process.

In a case of decreasing the synchronization ratio, the pressure-rise point position adjusting part 12 sends a control signal to the metering motor 10 in order to increase a rotating speed of the metering motor 10 by a predefined increment.

The pressure-rise point position adjusting part 12 may send a control signal to the feeder motor 9 in order to decrease a rotating speed of the feeder motor 9 by a predefined decrement.

The pressure-rise point position adjusting part 12 may send a control signal to both the feeder motor 9 and the metering motor 10, to increase a rotating speed of the metering motor 10 by a predefined increment, and to decrease a rotating speed of the feeder motor 9 by a predefined decrement.

If the pressure-rise point position adjusting part 12 controls rotating speeds of both the feeder motor 9 and the metering motor 10, the pressure-rise point position adjusting part 12 may increase a rotating speed of the feeder motor 9 while further increasing a rotating speed of the metering motor 10, or decrease a rotating speed of the metering motor 10 while further decreasing a rotating speed of the feeder motor 9.

In contrast, in a case of increasing the synchronization ratio, the pressure-rise point position adjusting part 12 sends a control signal to the metering motor 10 in order to decrease a rotating speed of the metering motor 10 by a predefined decrement.

The pressure-rise point position adjusting part 12 may send a control signal to the feeder motor 9 in order to increase a rotating speed of the feeder motor 9 by a predefined increment.

The pressure-rise point position adjusting part 12 may send a control signal to both the feeder motor 9 and the metering motor 10, to decrease a rotating speed of the metering motor 10 by a predefined decrement, and to increase a rotating speed of the feeder motor 9 by a predefined increment.

If the pressure-rise point position adjusting part 12 controls rotating speeds of both the feeder motor 9 and the metering motor 10, the pressure-rise point position adjusting part 12 may decrease a rotating speed of the feeder motor 9 while further decreasing a rotating speed of the metering motor 10, or increase a rotating speed of the metering motor 10 while further increasing a rotating speed of the feeder motor 9.

The control device 1 decreases or increases the synchronization ratio by a predefined decrement or increment. However, the control device 1 may adjust an increment or a decrement of the synchronization ratio depending on a degree of deviation from the ideal range of the pressure-rise point. In this case, the control device 1 widens an increment or a decrement of synchronization ratio as the degree of deviation becomes larger.

The control device 1 may graphically display a distribution of pressure in the cylinder 2 based on a value detected by the cylinder pressure sensor 6 on a display device (not shown) mounted on the resin processing device.

The control device 1 may display on the display device a relationship between the ideal range and a pressure-rise point estimated by the pressure-rise point estimating part 11, a warning message reporting that a pressure-rise point is outside the ideal range, or the like.

The control device 1 may display such information on an external display device connected to the resin processing device, or transmit such a warning message through an audio output device (not shown).

With the above described configuration, the plasticizing device 100 estimates a pressure-rise point based on outputs of the cylinder pressure sensor 6 and the screw position detection device 7. Thus, the plasticizing device 100 is able to monitor a state of resin more easily and more rapidly.

The plasticization device 100 also controls a synchronization ratio so that an estimated pressure-rise point falls within a predefined ideal range. Thus, the plasticization device 100 is able to control a state of resin to be suitable for processing more easily and more rapidly.

The plasticization device 100 estimates a pressure-rise point based on a predefined peak pressure coordinate, a value detected by the cylinder pressure sensor 6 installed at a location in the cylinder 2, and a distance between the cylinder pressure sensor 6 and the reference point X. Then, the plasticization device 100 controls a synchronization ratio so that the pressure-rise point falls within a predefined ideal range. Thus, the plasticizing device 100 is able to control a state of resin to be suitable for processing more easily and more rapidly.

The plasticization device 100 controls a synchronization ratio by controlling at least one of the feeder motor 9 and the metering motor 10. Thus, the plasticization device 100 is able to control a state of resin to be suitable for processing more easily and more rapidly.

In the above described embodiments, the plasticizing device 100 maintains a pressure-rise point within the ideal range by controlling the synchronization ratio with the pressure-rise point position adjusting part 12. However, the plasticizing device 100 may maintain a pressure-rise point within the ideal range by controlling a temperature adjusting device for adjusting a temperature in the cylinder 2 or a back pressure adjusting device for adjusting a back pressure of the screw 3.

In the above described embodiments, the plasticizing device 100 uses as the screw 3 a type of a screw whose compression ratio (outer diameter of a screw groove part) is constant along the screw groove part. However, the plasticizing device 100 may use a type of a screw whose compression ratio changes along the screw groove part.

## Claims

1. A plasticizing device (100), comprising:
a feeder (4) configured to supply a resin to a cylinder (2);
a screw (3) configured to move axially in the cylinder (2);
a cylinder pressure sensor (6) installed at a predetermined position in the cylinder (2) and configured to detect a pressure at the predetermined position in the cylinder (2);
a pressure-rise point estimating part (11) configured to estimate a position of a pressure-rise point (IL) where a pressure in the cylinder (2) starts to increase due to resin supplied into the cylinder (2) during a metering process based on a value detected by the cylinder pressure sensor (6).

2. The plasticizing device as claimed in claim 1, wherein the cylinder pressure sensor (6) is installed at one or more positions in the cylinder (2).

3. The plasticizing device as claimed in claim 1 or 2, further comprising:
a pressure-rise point position adjusting part (12) configured to adjust the position of the pressure-rise point (IL) where the pressure in the cylinder (2) starts to increase due to resin supplied into the cylinder (2).

4. The plasticizing device as claimed in any one of claims 1 to 3, further comprising:
a display part configured to display a pressure distribution based on a value detected by the cylinder pressure sensor (6).

## Patentansprüche

1. Plastizierungseinrichtung (100), die Folgendes aufweist:
eine Zuführung (4), die konfiguriert ist, um einem Zylinder (2) ein Harz zuzuführen;
eine Schnecke (3), die konfiguriert ist, um sich axial in dem Zylinder (2) zu bewegen;
einen Zylinderdrucksensor (6), der an einer vorbestimmten Position in dem Zylinder (2) installiert und konfiguriert ist, um einen Druck an der vorbestimmten Position in dem Zylinder (2) zu erfassen;
einen Druckanstiegspunkt-Schätzteil (11), der konfiguriert ist, um eine Position eines Druckanstiegspunktes (IL) zu schätzen, an dem ein Druck in dem Zylinder (2) zu steigen beginnt, und zwar aufgrund von Harz, das dem Zylinder (2) zugeführt wird während eines Dosiervorgangs auf der Grundlage eines vom Zylinderdrucksensor (6) erfassten Wertes.

2. Plastizierungseinrichtung nach Anspruch 1, wobei der Zylinderdrucksensor (6) an einer oder mehreren Positionen im Zylinder (2) installiert ist.

3. Plastizierungseinrichtung nach Anspruch 1 oder 2, die ferner Folgendes aufweist:
einen Druckanstiegspunkt-Positionseinstellungsteil (12), der konfiguriert ist, um die Position des Druckanstiegspunktes (IL) einzustellen, an dem der Druck in dem Zylinder (2) aufgrund des in den Zylinder (2) zugeführten Harzes zu steigen beginnt.

4. Plastizierungseinrichtung nach einem der Ansprüche 1 bis 3, die ferner Folgendes aufweist:
einen Anzeigeteil, der konfiguriert ist, um eine Druckverteilung basierend auf einem vom Zylinderdrucksensor (6) erfassten Wert anzuzeigen.

## Revendications

1. Dispositif de plastification (100), comprenant :
un distributeur (4) configuré pour fournir une résine à un cylindre (2) ;
une vis (3) configurée pour se déplacer axialement dans le cylindre (2) ;
un capteur de pression de cylindre (6) installé au niveau d'une position prédéterminée dans le cylindre (2) et configuré pour détecter une pression au niveau de la position prédéterminée dans le cylindre (2) ;
une partie d'estimation de point de montée en pression (11) configurée pour estimer une position d'un point de montée de pression (IL) où une pression dans le cylindre (2) commence à monter en raison de la résine introduite dans le cylindre (2) pendant un traitement de dosage sur la base d'une valeur détectée par le capteur de pression de cylindre (6).

2. Dispositif de plastification selon la revendication 1, dans lequel le capteur de pression du cylindre (6) est installé au niveau d'une ou de plusieurs positions dans le cylindre (2).

3. Dispositif de plastification selon la revendication 1 ou 2, comprenant en outre :
une partie de réglage de position du point de montée de pression (12) configurée pour régler la position du point de montée de pression (IL) où la pression dans le cylindre (2) commence à monter en raison de la résine introduite dans le cylindre (2).

4. Dispositif de plastification selon l'une quelconque des revendications 1 à 3, comprenant en outre :
une partie d'affichage configurée pour afficher une distribution de pression sur la base d'une valeur détectée par le capteur de pression de cylindre (6).
